# EUROPÄISCHE PATENTSCHRIFT

(11) **EP 3 299 203 B1**
(45) Veröffentlichungstag und Bekanntmachung des Hinweises auf die Patenterteilung: **19.12.2018**
(21) Anmeldenummer: 17001405.4
(22) Anmeldetag: 17.08.2017
(51) Int. Cl.: B60K 15/05

(54) **TANK- ODER ELEKTROANSCHLUSS**
TANK PORT OR ELECTRICAL CONNECTION
CONNEXION DE RÉSERVOIR OU D'ALIMENTATION ÉLECTRIQUE

(30) Priorität: 21.09.2016 CH 12362016
(43) Veröffentlichungstag der Anmeldung: 28.03.2018
(73) Patentinhaber: Kunststoff Schwanden AG, 8762 Schwanden (CH)
(72) Erfinder: Ackermann, Saimen, 8753 Mollis (CH)
(74) Vertreter: Quehl, Horst Max

(56) Entgegenhaltungen:
- EP-A1- 1 508 465
- DE-A1-102006 015 417
- DE-A1-102008 047 464
- DE-U1- 29 710 918
- KR-B1- 101 637 847
- US-A- 4 426 752

## Beschreibung

Die Erfindung betrifft einen Tank- oder Elektroanschluss eines Kraftfahrzeuges, mit einer in einer Karosserieöffnung des Fahrzeuges abgedichtet zu fixierenden Anschlussmulde, in der eine Aufnahmeöffnung für den Endstutzen eines Fahrzeugtankes oder für den Endbereich eines elektrischen Anschlussteckers vorgesehen ist und mit einem die Anschlussmulde verschliessenden, für einen Muldendeckel vorgesehenen Deckelträger, der mit einem gekrümmten Scharnierarm in einem seitlich an die Anschlussmulde angeformten Scharniergehäuse um eine Scharnierachse gelagert ist, wobei der Deckelträger durch eine im Bereich der Scharnierachse vorgesehene, einer Schliessbewegung entgegen wirkende Feder in geöffneter Position gehalten ist und an der dem Scharniergehäuse gegenüberliegenden Seite der Anschlussmulde lösbare Verriegelungsmittel vorgesehen sind, für die Verriegelung des Deckelträgers in geschlossener Position entgegen der Kraft dieser Feder.

Ein derartiger Tank- oder Elektroanschluss ist in seiner grundsätzlichen Gestaltung beispielsweise durch die DE102013021849 oder die DE 102006015417 A1 bekannt.

Für die Verzögerung von Öffnungs- und Schliessbewegungen und somit Vermeidung eines Schlaggeräusches sind verschiedene mit einer Scharnierachse verbundene Bremssysteme bekannt. Deren Bremswirkung wird durch in Reibungskontakt stehende Flächen erzeugt. Beispiele hierzu sind in der DE 4323095 (Fig.5), der DE 8404656 U1 oder der DE 10352445 gezeigt. Solche Bremssysteme lassen sich jedoch nur schwer und dauerhaft auf eine gewünschte Verzögerung der Schwenkbewegung des Muldendeckels einjustieren und aufgrund ihrer zahlreichen Einzelteile nur aufwendig herstellen und montieren.

Der Erfindung liegt die Aufgabe zugrunde einen im Folgenden als Anschluss bezeichneten Tank- oder Elektroanschluss der eingangs genannten Art zu finden, der die genannten Nachteile vermeidet und folglich mit nur verhältnismässig geringem Aufwand für die automatisierte Herstellung seiner Teile in Kunststoffspritztechnik und deren Montage eine optimale und geräuschvermeidende Charakteristik seiner Schliessbewegung gewährleistet.

Die Lösung dieser Aufgabe erfolgt für einen Anschluss der eingangs genannten Art erfindungsgemäss aufgrund der kennzeichnenden Merkmale des Patentanspruchs 1. Die Erfindung und deren vorteilhaften Ausgestaltungen werden in der folgenden Beschreibung anhand der Zeichnungen näher erläutert.

Es zeigt:
Fig.1 eine Aufsicht auf einen geschlossenen Anschluss bei weggelassenem Muldendeckel,
Fig.2 eine Seitenansicht des Annschlusses nach Fig. 1 in grösserer Darstellung und in geöffneter Position seines Deckelträgers,
Fig.3 eine Darstellung entsprechend Fig. 2 mit geschlossener Position seines Deckelträgers,
Fig.4 eine vergrösserte Teildarstellung zu Fig.3 im Bereich eines Längsschnittes durch die Tankmulde und im Bereich der Scharnierachse ihres Deckelträgers,
Fig.5 eine vergrösserte Teildarstellung eines Querschnittes durch den Anschluss im Bereich des Scharniergehäuses und in einer die Schwenkachse und eine Bremswelle des Deckelträgers einschliessenden Ebene,
Fig.6 einen gegenüber Fig.5 in einem anderen Winkel geführten Achsialschnitt im Bereich der Scharnierachse und
Fig.7 eine vergrösserte Teildarstellung eines entlang der Achse einer linearen Bremseinheit geführten Längsschnittes durch den geschlossenen Anschluss.

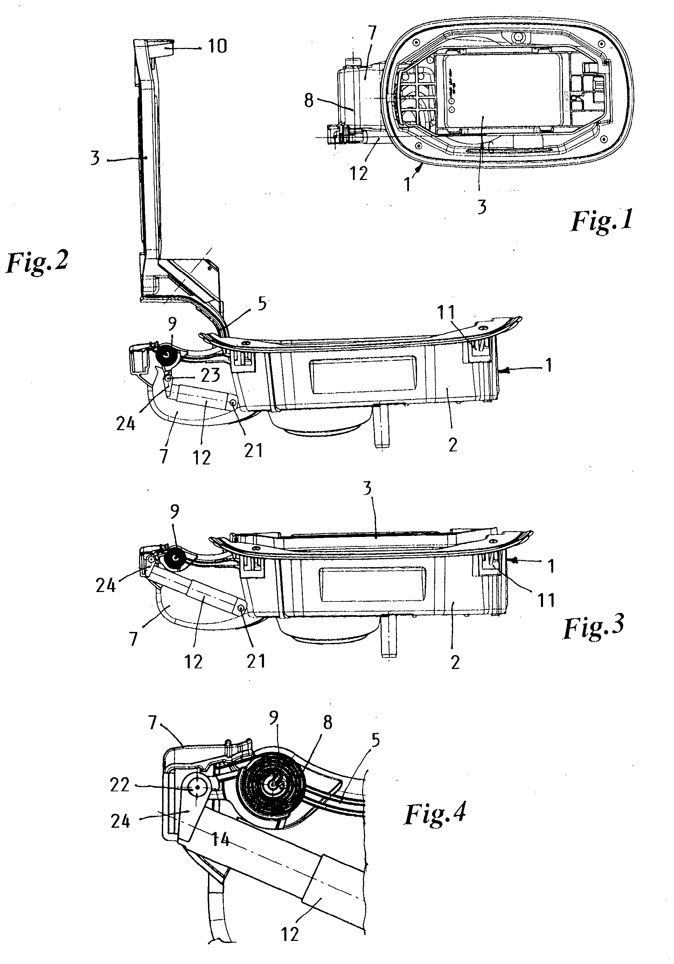

Wie die Darstellungen in Fig. 1 bis Fig. 3 zeigen, hat der Anschluss 1 eine für die abgedichtete Einfügung in eine Karosserieöffnung und dabei Aufschieben auf einen Tankstutzen bestimmte Anschlussmulde 2 und einen an ihr angelenkten Deckelträger 3 für einen Muldendeckel.

Für die Formstabilität des Deckelträgers 3 bei geringem Materialaufwand hat dieser ein Netz von Verstärkungsrippen 4. Für die ästhetische Anpassung an die Oberfläche eines Kraftfahrzeuges wird an ihm erst nachträglich bei der Fahrzeugmontage, ein an das Fahrzeug auch hinsichtlich einer Lackierung ästhetisch angepasster, nicht dargestellter Muldendeckel z.B. durch Verrastung befestigt.

Damit die Anschlussmulde 2 mit bündigem Verlauf eines Muldendeckels relativ zur Karosserieoberfläche eines Fahrzeuges verschliessbar ist, hat der Deckelträger 3 einen nahezu halbkreisförmig gekrümmten Scharnierarm 5, dessen äusseres Ende in einem seitlich an die Anschlussmulde 2 angeformten Scharniergehäuse 7 um eine Scharnierachse 8 gelagert ist.

Das Öffnen der Anschlussmulde 2 durch Aufklappen des Deckelträgers 3 erfolgt durch die Kraft einer um die Scharnierachse 8 angeordneten, z.B. aus einem flachen Stahlband gewickelten Spiralfeder 9, nach Freigabe eines an ihrem freien Ende angeformten Verschlussteiles 10. Für die Verriegelung dieses Verschlussteiles 10 sind in einer endseitige Eingriffsöffnung 11 der Anschlussmulde 2 fahrzeugseitig nicht dargestellte, fernbetätigbare Riegelmittel vorgesehen.

Für die optimal kontrollierte Verzögerung der mit der Kraft der gespannten Spiralfeder 9 erfolgenden Öffnungsbewegung des Deckelträgers 3 ist erfindungsgemäss eine auf dem Kolben-Zylinder-Prinzip beruhende, lineare Dämpfungseinheit 12 vorgesehen, wie sie aufgrund dieses Prinzips mit gewünschter Charakteristik des Bremskraftverlaufs über Zulieferer verfügbar ist.

Die kinematische Verbindung der zylindrisch geformten Dämpfungseinheit 12 mit dem Deckelträger 3 erfolgt über eine Kurbelwelle 13 mit endseitig angeformter, scheibenförmiger Kurbel 14, die in die als Hohlwelle ausgeführte Scharnierachse 8 achsgleich eingeschoben und dort verrastet ist.

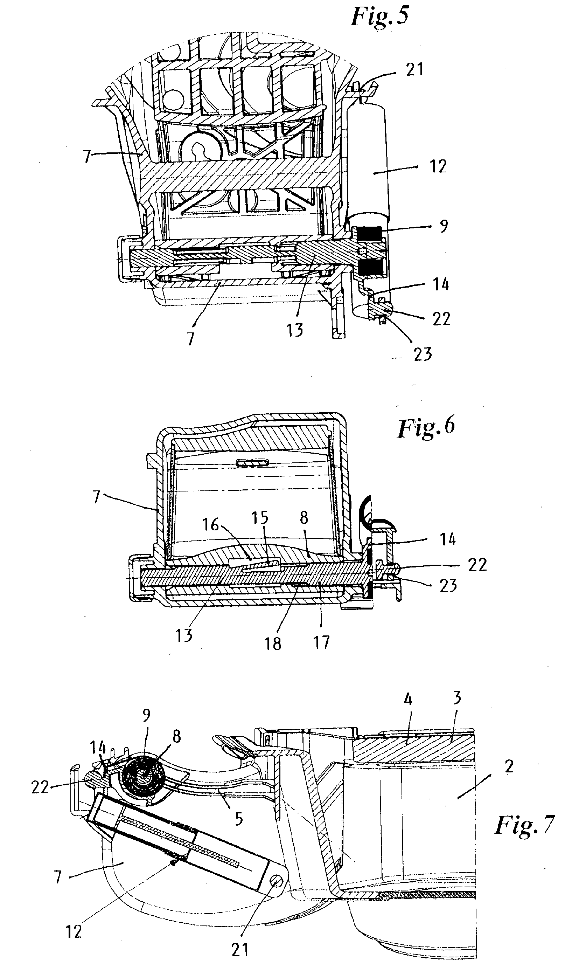

Entsprechend der Darstellung in Fig.6 erfolgt die Verrastung in der Scharnierachse 8 durch den Eingriff mindestens einer von der Kurbelwelle 13 mit flachem Winkel abstehenden Rastzunge 15 in eine in der Scharnierachse 8 vorgesehene Rastausnehmung 16.

Für die Drehmomentübertragung von der hohlen Scharnierachse 8 auf die Kurbelwelle 13 sind entsprechend der Darstellung in Fig. 5 und Fig. 6 an der Kurbelwelle 13 Längsrippen 17 vorgesehen, die in innere Längsnute 18 der hohlen Scharnierachse 8 eingeschoben sind.

Die endseitige Kurbel 14 der auf diese Weise profilierten Kurbelwelle 13 ist über ein Zapfengelenk 19 mit einem Ende der linearen Dämpfungseinheit 12 verbunden, deren anderes Ende entsprechend der Darstellung in Fig.5 über ein zweites Gelenk 21 seitlich am Scharniergehäuse 7 befestigt ist.

Dieses Zapfengelenk 19 hat entsprechend den Darstellungen in Fig. 5 und Fig. 7 einen an der Kurbel 14 endseitig angeformten Kurbelzapfen 22, der in ein Zapfenlager 23 eines Kopfteiles 24 der Dämpfungseinheit 12 eingreift und aufgrund einer pilzartigen Formgebung des Kurbelzapfens dort druckknopfartig verrastet ist.

Aufgrund der beschriebenen Merkmale des Anschlusses lassen sich die in Kunststoffspritztechnik hergestellten Teile auf einfache Weise durch automatisierte Montage funktionsgerecht zueinander montieren.

## Patentansprüche

1. Tank- oder Elektroanschluss (1) eines Kraftfahrzeuges, mit einer in einer Karosserieöffnung des Fahrzeuges abgedichtet zu fixierenden Anschlussmulde (2), in der eine Aufnahmeöffnung für den Endstutzen eines Fahrzeugtankes oder für den Endbereich eines elektrischen Anschlussteckers vorgesehen ist und mit einem die Anschlussmulde (2) verschliessenden, für einen Muldendeckel vorgesehenen Deckelträger (3), der mit einem gekrümmten Scharnierarm (4) in einem seitlich an die Anschlussmulde (2) angeformten Scharniergehäuse (7) um eine Scharnierachse (8) gelagert ist, wobei der Deckelträger (3) durch eine im Bereich der Scharnierachse (8) vorgesehene, einer Schliessbewegung entgegen wirkende Feder (9) in geöffneter Position gehalten ist und an der dem Scharniergehäuse (7) gegenüberliegenden Seite der Anschlussmulde (2) lösbare Verriegelungsmittel vorgesehen sind, für die Verriegelung des Deckelträgers (3) in geschlossener Position entgegen der Kraft dieser Feder (9), **dadurch gekennzeichnet, dass** die Scharnierachse (8) über eine Kurbel (14) und ein lineares Dämpfungselement (12) mit der Anschlussmulde (2) oder deren Scharniergehäuse (7) verbunden ist.

2. Anschluss nach Anspruch 1, **dadurch gekennzeichnet, dass** die Kurbel (14) endseitiger Teil einer Kurbelwelle (13) ist, die in einer als Hohlwelle ausgeführten Scharnierachse (8) achsgleich verrastet ist.

3. Anschluss nach Anspruch 2, **dadurch gekennzeichnet, dass** die Verrastung durch mindestens eine von der Kurbelwelle (13) mit flachem Winkel abstehenden Rastzunge (15) gegeben ist, die in eine in der Scharnierachse (8) dazu passend vorgesehene Rastausnehmung (16) eingreift.

4. Anschluss nach Anspruch 2 , **dadurch gekennzeichnet, dass** an der Kurbelwelle (13) Längsrippen 17 vorgesehen, die in innere Längsnute (18) der hohlen Scharnierachse (8) eingeschoben sind

5. Anschluss nach Anspruch 2, **dadurch gekennzeichnet, dass** die endseitige Kurbel (14) der Kurbelwelle (13) über ein Zapfengelenk (19) mit einem Ende der linearen Dämpfungseinheit (12) verbunden ist, deren anderes Ende über ein zweites Gelenk (21) seitlich am Scharniergehäuse (7) befestigt ist.

6. Anschluss nach Anspruch 2, **dadurch gekennzeichnet, dass** das Zapfengelenk (19) einen an der Kurbel (14) endseitig angeformten Kurbelzapfen (22) aufweist, der in einem Zapfenlager (23) eines Kopfteiles (24) der Dämpfungseinheit (12) eingreift und dort druckknopfartig verrastet ist.

## Claims

1. Tank connection or electrical connection (1) of a motor vehicle, having a connection bulge (2) to be fixed in a sealed manner in a body opening of the vehicle, a receiving opening for the end stub of a vehicle tank or for the end region of an electrical connection plug being provided in said connection bulge (2) and having a cover carrier (3) which closes the connection bulge (2) and is provided for a bulge cover, said cover carrier (3) being mounted with a curved hinge arm (4) in a hinge housing (7) moulded laterally on the connection bulge (2) around a hinge axis (8), wherein the cover carrier (3) is held in an open position by a spring (9) which is provided in the region of the hinge axis (8) and counteracts a closing movement and, on the side of the connection bulge (2), said side being opposite the hinge housing (7), releasable locking means are provided, for locking the cover carrier (3) in a closed position against the force of this spring (9), **characterised in that** the hinge axis (8) is connected to the connection bulge (2) or its hinge housing (7) via a crank (14) and a linear attenuator (12).

2. Connection according to claim 1, **characterised in that** the crank (14) is an end-side part of a crank shaft (13), which is coaxially latched in a hinge axis (8) designed as a hollow shaft.

3. Connection according to claim 2, **characterised in that** the latching takes place by means of at least one latch tongue (15) protruding from the crank shaft (13) at a flat angle, said latch tongue (15) engaging in a latch recess (16) provided to fit in the hinge axis (8).

4. Connection according to claim 2, **characterised in that** longitudinal ribs (17) are provided on the crank shaft (13) which are inserted into inner grooves (18) of the hollow hinge axis (8).

5. Connection according to claim 2, **characterised in that** the end-side crank (14) of the crank shaft (13) is connected to an end of the linear damping unit (12) via a pivot joint (19), the other end of said damping unit (12) being fastened laterally on the hinge housing (7) via a second joint (21).

6. Connection according to claim 2, **characterised in that** the pivot joint (19) has a crank pin (22) moulded on the crank (14) on the end side, said crank pin (22) engaging in a pivot bearing (23) of a head part (24) of the damping unit (12) and being latched there in a push button manner.

## Revendications

1. Raccord (1) pour réservoir ou pour enfichage électrique destiné à un véhicule automobile, comportant une cuvette de raccord (2) destinée à être fixée de manière étanche dans une ouverture de carrosserie du véhicule et dans laquelle une ouverture de réception est prévue pour la tubulure d'un réservoir de véhicule automobile ou pour la partie d'extrémité d'une fiche de raccordement électrique, et comportant un porte-couvercle (3), obturant la cuvette de raccord (2), prévu pour un couvercle de cuvette, lequel porte-couvercle est monté, par le biais d'un bras articulé (4) incurvé, dans un boîtier de charnière (7) disposé latéralement par rapport à la cuvette de raccord (2) et formé autour d'un axe de charnière (8), le porte-couvercle (3) étant maintenu en position ouverte par un ressort (9) disposé dans la région de l'axe de charnière (8) et agissant dans le sens contraire à un mouvement de fermeture, et des moyens de verrouillage réversible étant disposés sur le côté de la cuvette de raccord (2) situé en face du boîtier de charnière (7), pour le verrouillage du porte-couvercle (3) en position fermée à l'encontre de la force de ce ressort (9), **caractérisé en ce que** l'axe de charnière (8) est relié à la cuvette de raccord (2) ou au boîtier de charnière (7) de celle-ci par un coude (14) et un élément d'amortissement linéaire (12).

2. Raccord selon la revendication 1, **caractérisé en ce que** le coude (14) constitue une partie terminale d'un vilebrequin (13) qui est emboîté selon le même axe dans un axe de charnière (8) réalisé sous la forme d'un arbre creux.

3. Raccord selon la revendication 2, **caractérisé en ce que** l'emboîtement se produit par le biais d'au moins une languette d'emboîtement (15) séparée du vilebrequin (13) selon un angle plat, laquelle languette s'insérant dans un évidement d'emboîtement (16) correspondant situé dans l'axe de charnière (8).

4. Raccord selon la revendication 2, **caractérisé en ce que** des nervures longitudinales (17) sont prévues sur le vilebrequin (13) et sont introduites dans des gorges longitudinales internes (18) de l'axe de charnière creux (8).

5. Raccord selon la revendication 2, **caractérisé en ce que** le coude (14) terminal du vilebrequin (13) est relié par une articulation à pivot (19) à une extrémité de l'unité d'amortissement linéaire (12), dont l'autre extrémité est fixée, par une deuxième articulation (21), sur le côté du boîtier de charnière (7).

6. Raccord selon la revendication 2, **caractérisé en ce que** l'articulation à pivot (19) présente un maneton (22) formé à l'extrémité du coude (14), qui s'insère dans un support de pivot (23) d'une partie supérieure (24) de l'unité d'amortissement (12) et qui s'emboîte dans celui-ci selon le principe du bouton-poussoir.
